# EUROPÄISCHE PATENTSCHRIFT

(11) **EP 2 659 158 B1**
(45) Veröffentlichungstag und Bekanntmachung des Hinweises auf die Patenterteilung: **20.09.2017**
(21) Anmeldenummer: 11779422.2
(22) Anmeldetag: 08.11.2011
(51) Int. Cl.: F16D 65/12

(54) **BREMSSCHEIBE UND VERFAHREN ZUR BEHANDLUNG DER OBERFLÄCHE EINER BREMSSCHEIBE**
BRAKE DISC AND METHOD FOR TREATING THE SURFACE OF A BRAKE DISC
DISQUE DE FREIN ET PROCÉDÉ SERVANT À TRAITER LA SURFACE D'UN DISQUE DE FREIN

(30) Priorität: 29.12.2010 DE 102010064350
(43) Veröffentlichungstag der Anmeldung: 06.11.2013
(73) Patentinhaber: Robert Bosch GmbH, 70442 Stuttgart (DE)
(72) Erfinder: SCHOEPF, Martin, 70499 Stuttgart (DE); SCHAEFER, Bernd, 71636 Ludwigsburg (DE)
(86) Internationale Anmeldenummer: PCT/EP2011/069619
(87) Internationale Veröffentlichungsnummer: WO 2012/089386

(56) Entgegenhaltungen:
- WO-A1-95/02130
- WO-A1-2010/015229
- DE-B3-102006 045 275
- GB-A- 2 268 511
- US-A- 5 353 553
- US-A1- 2005 064 146
- US-B1- 6 290 032

## Beschreibung

Die vorliegende Erfindung betrifft eine Bremsscheibe und ein Verfahren zur Behandlung einer Oberfläche einer Bremsscheibe, wobei zur Erhöhung der Haftfähigkeit einer Beschichtung auf der Oberfläche diese aufgerauht wird, indem in die Oberfläche mindestens eine Vertiefung eingebracht wird, deren Breite mit zunehmender Tiefe der Vertiefung zunimmt und mittels diesem Hinterschnitt eine formschlüssige Verbindung zwischen Bremsscheibe und Beschichtung erzeugt wird.

### Stand der Technik

Aus dem Stand der Technik ist es bekannt, für thermische Beschichtungsprozesse wie dem Flammspritzen oder dem Plasmaspritzen die Oberflächen vor dem Beschichten einer Aktivierung zu unterziehen. Diese Aktivierung besteht im Normalfall aus einem Aufrauhen der Oberfläche, indem die Oberfläche mit druckbeaufschlagten Abrasivpartikeln, insbesondere mit scharfkantigen Partikeln wie Edelkorund bearbeitet wird. Dieser Schritt wird auch als Strahlspanprozess bezeichnet.

Derartige Strahlspanprozesse haben den Nachteil, dass die erzeugten Oberflächenbeschaffenheiten nicht exakt reproduzierbar sind und damit verbundenen Haftfähigkeiten der Be schichtungen großen Schwankungen unterliegen können, was für Großserienfertigungen nicht geeignet ist.

Die US 2005/064146 A1 zeigt Vertiefungen an einer Materialoberfläche, wobei die Breite der Vertiefungen mit zunehmender Tiefe der Vertiefung zunimmt. Diese Vertiefungen werden mit einer Oberflächenbeschichtung gefüllt.

Die WO 2010/015229 A1 zeigt Vertiefungen bzw. Rillen auf der Oberfläche eines zylindrischen Körpers.

Die DE 10 2006 045275 B3 betrifft ein Verfahren zur Herstellung eines beschichteten Produktes mit einem Grundkörper, dessen Oberfläche mit einem Schneidwerkzeug spanabhebend unter Ausbildung eines Hinterschnittes bearbeitet und anschließend beschichtet wird. Hierbei wird mit einem zweiten, spanabhebenden Schneidwerkzeug ein zweiter Hinterschnitt in die Oberfläche eingebracht wird, der zu dem ersten Hinterschnitt entgegengesetzt orientiert ausgerichtet ist.

### Offenbarung der Erfindung

Der Kern der vorliegenden Erfindung ist es, eine exakt reproduzierbare Oberflächenaktivierung zu schaffen, um Oberflächenbeschichtungen mit möglichst geringen Schwankungen der Prozeßparameter auf die aktivierten Oberflächen aufzubringen.

Erfindungsgemäß wird dieses durch die Merkmale der unabhängigen Ansprüche gelöst. Vorteilhafte Weiterbildungen und Ausgestaltungen ergeben sich aus den Unteransprüchen.

Dabei besteht die Erfindung aus einer Bremsscheibe, das die erfindungsgemäße Oberflächenaktivierung aufweist, weiterhin aus einem Verfahren zur Oberflächenaktivierung. Die Bremsscheibe mit der erfindungsgemäßen Oberfläche zeigt dabei zur Erhöhung der Haftfähigkeit einer Beschichtung auf der Oberfläche eine Strukturierung auf, wobei die Strukturierung der Oberfläche mindestens eine Vertiefung aufweist, deren Breite mit zunehmender Tiefe der Vertiefung zunimmt. Hierdurch ist es möglich, eine formschlüssige Verbindung zwischen einer anschließend aufzubringenden Beschichtung und dem Werkstück zu erzeugen, wobei die formschlüssige Verbindung eine exakte Reproduzierbarkeit aufweist.

Vorteilhafterweise weist die mindestens eine Vertiefung ein Querschnittsprofil in Schwalbenschwanzform auf, wodurch eine Formschlüssigkeit entsteht.

Erfindungsgemäß ist vorgesehen, dass die mindestens eine Vertiefung die Form einer spiralförmigen Vertiefung, ähnlich der Rille einer Schallplatte, aufweist. Dadurch wird es möglich, die Oberflächenaktivierung durch eine spanende Materialbearbeitung, insbesondere einen Drehprozeß, durchzuführen, wobei die Oberflächenaktivierung sehr schnell und kostengünstig durchgeführt werden kann.

Vorteilhafterweise ist die Dicke der aufzutragenden Beschichtung größer als die Tiefe der mindestens einen Vertiefung, so dass nach dem Beschichtungsprozeß die Vertiefung vollständig mit Beschichtungsmaterial ausgefüllt ist und eine vollständig ebene Oberfläche entsteht.

Weiterhin ist es vorteilhaft, dass die Beschichtung aus einem Material mit hoher Abriebfestigkeit besteht und die Oberfläche, insbesondere die Oberfläche der Bremsscheibe, sehr verschleißfest wird. Besonders vorteilhaft wird die Oberflächenaktivierung mittels mindestens einer Vertiefung, die eine formschlüssige Verbindung zwischen der Beschichtung und der Bremsscheibe erzeugt, an den Bereichen der Bremsscheibe durchgeführt, an denen die beschichtete Bremsscheibe später in Kontakt mit den Bremsbelägen kommt.

Im Rahmen der Erfindung ist ein Verfahren zur Behandlung einer Oberfläche einer Bremsscheibe zur Erhöhung der Haftung einer Beschichtung auf der Oberfläche vorgesehen, wobei auf der Oberfläche mindestens eine Vertiefung eingebracht wird, deren Breite mit zunehmender Tiefe zunimmt. Damit wird erfindungsgemäß die Formschlüssigkeit zwischen der Werkstückoberfläche und der Beschichtung ermöglicht. Erfindungsgemäß ist vorgesehen, dass die mindestens eine Vertiefung die Form einer spiralförmigen Vertiefung, ähnlich der Rille einer Schallplatte, aufweist. Dadurch wird es möglich, die Oberflächenaktivierung durch eine spanende Materialbearbeitung, insbesondere einen Drehprozeß, durchzuführen, wobei die Oberflächenaktivierung sehr schnell und kostengünstig durchgeführt werden kann. Vorteilhafterweise wird die mindestens eine Vertiefung mittels spanender Materialbearbeitung erzeugt, insbesondere mittels Drehen.

Vorteilhafterweise wird die mindestens eine Vertiefung in mehreren Schritten erzeugt. Nach dem Einstechen des Drehwerkzeugs in die Materialoberfläche wird in einem ersteren Schritt eine erste Hinterschneidung auf der ersten Seitenflanke der Vertiefung erzeugt, indem das Schneidwerkzeug in eine rechte, zweitere Richtung bewegt wird, die der ersteren Richtung entgegengesetzt ist. Durch diesen Schritt wird eine weitere Hinterschneidung erzeugt. Nachdem das Schneidwerkzeug in eine mittlere Position bewegt wurde und vom dem Werkstück entfernt wurde, verbleiben zwei Hinterschnitte, die gemeinsam eine Vertiefung erzeugen, deren Breite mit zunehmender Tiefe zunimmt und ein schwalbenschwanzförmiges Profil aufweist. Durch die beiden entgegengesetzt angebrachten Hinterschnitte wird eine Formschlüssigkeit mit der später aufgebrachten Beschichtung erzeugt, die die Beschichtung untrennbar mit dem Werkstück verankert.

Vorteilhafterweise werden mehrere Vertiefungen mit einem einzigen Werkzeug zeitgleich erzeugt, indem ein Schneidwerkzeug mit mehreren gleichartigen, nebeneinander angeordneten kammförmigen Schneidkanten verwendet wird. Hierdurch ein Mehrfachnutzen erzielt, indem in einem einzigen Arbeitsschritt eine Vielzahl benachbarter, gleichartiger Vertiefungen erzeugt wird, wodurch die Oberflächenaktivierung schneller und damit kostengünstiger durchgeführt werden kann.

Weiterhin ist es vorteilhaft, wenn ein Schneidwerkzeug mit sogenannten Standard-Schneidplättchen verwendet werden kann, da hierdurch eine kostengünstige Herstellung und Wartung des Werkzeugs erreicht wird und hierdurch ebenfalls eine schnelle Oberflächenaktivierung durchführen läßt. Hierzu ist ein Werkzeug mit mehreren, insbesondere zwei Schneidkanten, vorgesehen, bei dem die abgestimmten Vorschubgeschwindigkeit des Werkzeugs gegenüber dem Werkstück auf die Rotationsgeschwindigkeit des Werkstücks so abgestimmt ist, dass mit einer ersten Schneidkante des Werkzeugs eine erste Hinterschneidung auf der ersten Seitenflanke der Vertiefung erzeugt wird und gleichzeitig mit einer zweiten Schneidkante des Werkzeugs eine zweite Hinterscheidung auf der gegenüberliegenden Seitenflanke der Vertiefung erzeugt wird. Dabei sind die beiden Hinterschneidungen aufgrund der abgestimmten Vorschubgeschwindigkeit so angeordnet, dass diese zusammen eine gemeinsame Vertiefung ausbilden, wobei das die breite des Querschnittsprofils der Vertiefung mit zunehmender Tiefe zunimmt und wiederum ein schwalbenschwanzförmiges Querschnittsprofil ausbildet. Dabei werden die erste Hinterschneidung und die zweite Hinterscheidung gleichzeitig erzeugt und durch die Vorschubgeschwindigkeit spiralförmig über die Werkstückoberfläche erzeugt, ähnlich der Tonrille einer Schallplatte.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### kurze Beschreibung der Zeichnungen

Nachfolgend werden Ausführungsbeispiele der Erfindung anhand von Zeichnungen erläutert. Es zeigen
- Fig.1: ein beispielhaftes Werkstück, beispielsweise eine Bremsscheibe,
- Fig.2: ein Ausführungsbeispiel eines ersten, erfindungsgemäßen Werkzeugs,
- Fig.3: den Einsatz des ersten, erfindungsgemäßen Werkzeugs,
- Fig.4: die aktivierte Oberfläche nach der erfindungsgemäßen Bearbeitung,
- Fig.5: ein Ausführungsbeispiel eines weiteren, erfindungsgemäßen Werkzeugs und
- Fig.6: den Einsatz des weiteren, erfindungsgemäßen Werkzeugs.

### Ausführungsformen der Erfindung

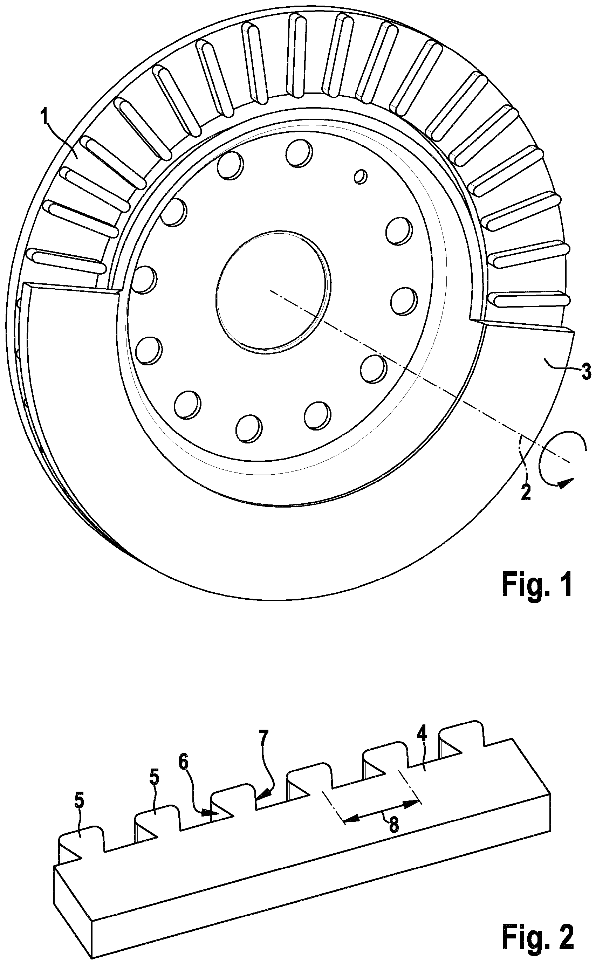

Figur 1 zeigt ein Werkstück 1, das beispielhaft als Bremsscheibe ausgeführt sein kann. Ein derartiges Werkstück 1 weist dabei eine Rotationsachse 2 auf, um die das Werkstück 1, im Rahmen eines Drehverfahrens rotiert. Weiterhin ist eine Fläche 3 vorgesehen, die mittels des erfindungsgemäßen Werkzeugs und Verfahrens strukturiert wird und in die eine Mikrostruktur zur Erhöhung der Haftfähigkeit einer anschließend aufzubringenden Beschichtung, die beispielsweise mittels eines Flammspritzverfahrens oder eines Plasmaspritzverfahrens aufgebracht wird, eingebracht wird.

In Figur 2 ist ein Ausführungsbeispiel eines möglichen Werkzeugs 4 zur Erzeugung der erfindungsgemäßen Mikrostruktur aufgezeigt. Dabei weist das Werkzeug 4 an einer Seite mindestens zwei Schneidkanten 6, 7 auf, die gegeneinander derart zulaufen, dass die Verlängerungsachsen der beiden Schneidkanten 6,7 sich auf de dem Werkstück 1 abgewandten Seite schneiden. Dabei ergibt sich ein Schneidkantenprofil 5, das an eine Zahnform erinnert und im Folgenden als Schneidzahn 5 bezeichnet wird. Die mindestens zwei Schneidkanten 6,7 bilden dabei die linke bzw. rechte Seitenflanke des Schneidzahns 5, so dass sich eine Schwalbenschwanzform der im Werkstück erzeugten Mikrostruktur ergibt. Zur Steigerung der Effizienz eines derartigen Werkzeugs ist weiterhin vorgesehen, mehrere Schneidzähne 5 entlang einer Linie des Werkzeugs 4 anzuordnen, wobei die Schneidzähne vorteilhaft in regelmäßigen Zahnabständen 8 angeordnet sind.

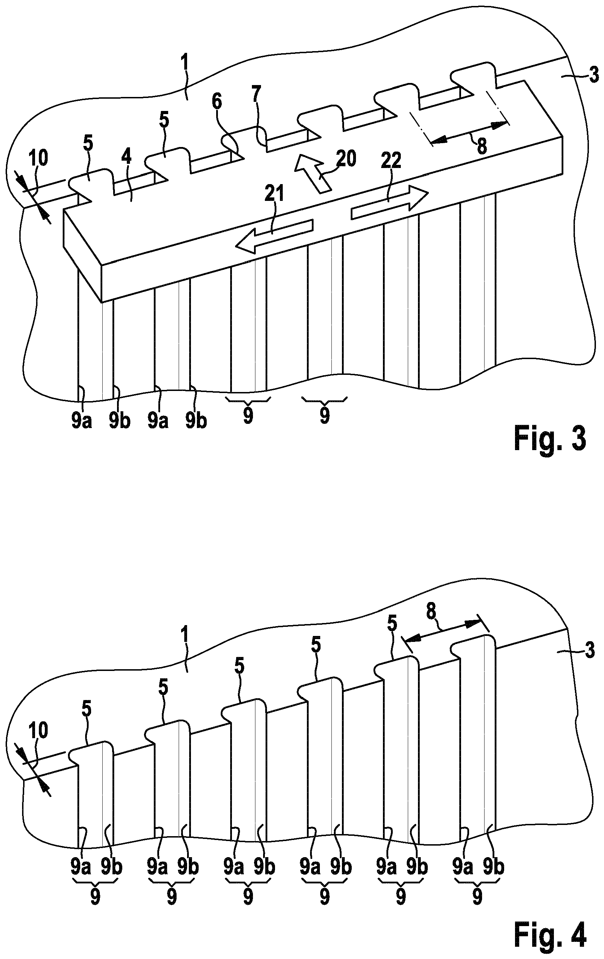

In Figur 3 ist beispielhaft der Einsatz des in Figur 2 gezeigten Werkzeugs 4 zur Bearbeitung des in Figur 1 gezeigten Werkstücks 1 aufgezeigt. Es ist hierbei das Werkstück 1, beispielhaft eine Bremsscheibe, als Aufschnitt dargestellt, dessen zu bearbeitende Oberfläche 3 in Figur 3 aufrecht zur Blickrichtung positioniert ist. Weiterhin ist das Werkzeug 4 ebenfalls als Aufschnitt dargestellt, wobei die im Zahnabstand 8 angeordneten Schneidzähne 5 zum Werkstück 1 positioniert sind und in die zu strukturierende Oberfläche 3 einschneiden. Dabei ist zu erkennen, dass jeder Schneidzahn 5 eine linke und ein rechte Seitenkante aufweist, die als mindestens zwei Schneidkanten 6,7 aus Figur 2 bekannt sind. Bei der Mikrostrukturierung der Oberfläche 3 des Werkstücks 1 mittels eines Drehverfahrens rotiert das Werkstück 1 gegenüber dem Werkzeug 4 derart, dass sich dar in Figur 3 gezeigt Ausschnitt des Werkstücks 1 nach unten bewegt und das Werkstück 1 insgesamt eine Rotation um eine horizontale Rotationsachse 2, wie in Figur 1 dargestellt, ausführt. Dabei schneiden die Schneidzähne 5 in die Oberfläche 3 ein und erzeugen in der Oberfläche 3 regelmäßige Vertiefungen 9 in Abständen 8, wenn das Werkzeug 4 in die Einstichrichtung 20 zum Werkstück 1 hin bewegt wird. Wurde das Werkzeug 4 so weit in Richtung zum Werkstück 1 hin zugestellt, dass die Schneidkanten 6,7 Vertiefungen mit einer gewünschten Tiefe 10 erzeugen, so wird das Werkzeug 4 in einer ersteren Bewegungsrichtung 21 parallel zur Oberfläche 3 bewegt. Während dieser ersteren Bewegung 21 verbreitert die erste Schneidkante 6 die Vertiefung 9 derart, dass ein erster Hinterschnitt 9a an den linksseitigen Rändern der Vertiefungen 9 entstehen. Anschließend wird in einer zweiteren Bewegungsrichtung 22, bei der das Werkzeug 4 ebenfalls parallel zur Oberfläche 3, aber nun in entgegengesetzter Richtung zum Werkstück 1 bewegt wird, bewegt. Dabei schneidet nun die zweite Seitenflanke 7 der Schneidzähne 5 einen zweiten Hinterschnitt 9b in die rechtsseitigen Ränder der Vertiefungen 9, so dass die Vertiefungen 9 auf beiden Seiten 9a und 9b jeweils spiegelverkehrte Hinterschnitte aufweisen. Anschließend wird das Werkzeug 4 wieder etwas in Richtung 21 bewegt, so dass die Schneidzähne 5 eine Mittelposition in den Vertiefungen 9 einnehmen und entgegengesetzt zur Einstechrichtung 20 ohne Werkstückberührung aus den Vertiefungen 9 herausgefahren werden können. Die sich bei diesem Vorgehen ergebenden Mikrostrukturen 9 sind dabei nochmals vergrößert in Figur 4 dargestellt.

In Figur 4 ist wiederum das Werkstück 1, beispielsweise eine Bremsscheibe dargestellt, im Aufschnitt gezeigt, die eine mittels eines Drehverfahrens zu strukturierende Oberfläche 3 aufweist und in Figur 4 ebenfalls wie in Figur 3, nach vorne weist. In diese Oberfläche 3 wurden Vertiefungen 9 eingebracht, die mit einem Zahnabstand 8 voneinander entfernt sind. Die Tiefe der 10 der Vertiefungen beträgt dabei die Tiefe des Werkzeugeinstichs, der im Bereich von 10 µm bis 1000 µm liegen kann. Weiterhin bestehen die Vertiefungen 9 jeweils aus zwei Hinterschnitten 9a, 9b, wobei der jeweils erste Hinterschnitt 9a am linken Rand der Vertiefung 9 und der zweite Hinterschnitt 9b am jeweils rechten Rand der Vertiefung 9 aufgezeigt ist. Durch diese beiden Hinterschnitte 9a, 9b ergeben sich Querschnittsprofile in schwalbenschwanzähnlicher Form, die eine formschlüssige Verbindung mit einer später aufzubringenden Beschichtung erlaubt.

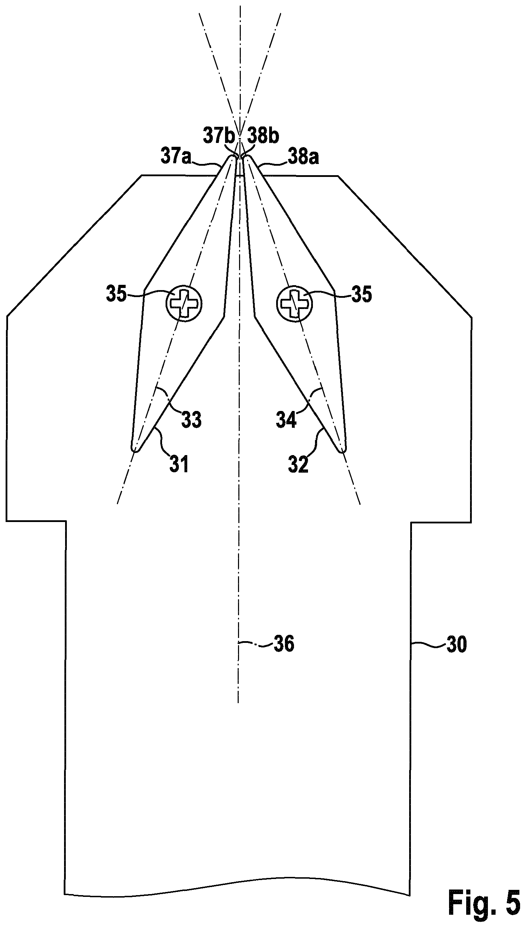

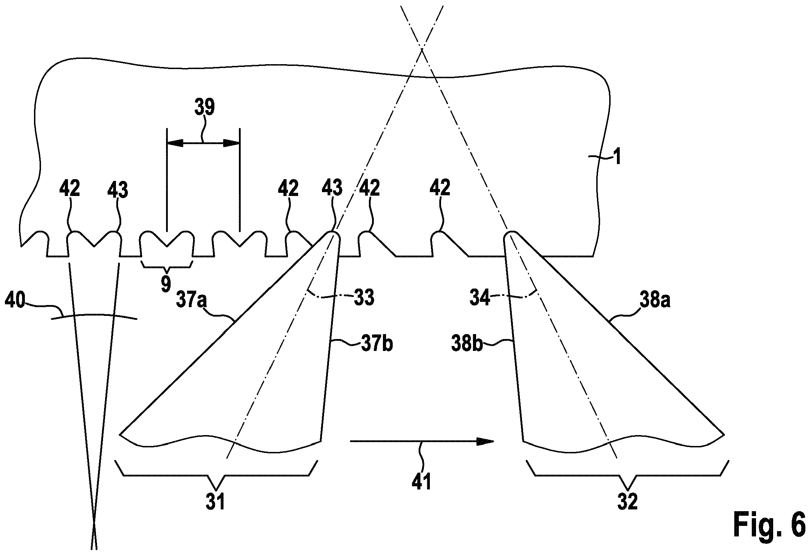

In Figur 5 ist ein weiteres Ausführungsbeispiel eines erfindungsgemäßen Werkzeugs 30 gezeigt, bei dem ein Schnittplättchenhalter 30 zwei Standard-Wendeschneidplättchen 31, 32 aufnimmt. Beide Schneidplättchen 31, 32 sind mittels Befestigungschrauben 35 auf dem Schneidwerkzeug 30 befestigt. Dabei sind die beiden Schneidplättchen 31, 32 so nebeneinander angeordnet, dass jeweils eine Ecke und mindestens eine Schneidkante oben über die Schneidwerkzeugkante hinausragt. Die Schneidplättchen 31, 32 sind dabei so gewählt, dass die oben über die Werkzeugkante hinausragende Spitze einen möglichst spitzen Winkel mit einem möglichst kleinen Radius aufweist um eine möglichst kleine Mikrostruktur in Form der Vertiefungen 9, 42, 43 mit einer möglichst geringen Tiefe 10 erzeugen zu können. Beide, vorteilhafterweise rautenförmigen Schneidplättchen 31, 32 sind auf dem Schneidplättchenhalter 30 so befestigt, dass die Symmetrieachsen 33, 34 der Plättchen 31, 32 in Längsrichtung nicht parallel sondern zueinander zulaufen und sich außerhalb des Schneidplättchenhalters 30 schneiden. Vorteilhafterweise ist der Schneidplättchenhalter ebenfalls symmetrisch gefertigt, so dass der Schnittpunkt der beiden Schnittplättchenlängsachsen 33, 34 auf der Schneidplättchenhaltermittelachse 36 liegt. Die Neigung der beiden Schneidplättchenmittelachsen 33, 34 zueinander muß dabei so stark gewählt werden, dass die beiden inneren Schneidkanten 37b und 38b der beiden Schneidplättchen 31 und 32 ebenfalls aufeinander zulaufen und deren gedachte Verlängerungslinien sich oberhalb des Werkzeugs schneiden. Verlaufen diese beiden inneren Schneidkanten 37b und 38b parallel zueinander oder sogar nach oben hin auseinander, so dass sich die Verlängerungslinien innerhalb des Schneidplättchenhalters 30 oder unterhalb dessen schneiden, so ist es nicht möglich, auf die in Figur 6 gezeigt Art und Weise Hinterschnitte 9a, 9b 42, 43 in der Oberfläche 3 des Werkstücks 1 zu erzeugen. Die äußeren Kanten 37a und 38a des Schneidwerkzeugs weisen dabei vorteilhaft ebenfalls Schneidkanten auf, da die vorteilhaft beschriebenen Standard-Wende-Schneidplättchen üblicherweise auf beiden Seiten rundherum umlaufende Schneidkanten 37a, 37b, 38a, 38b aufweisen, die auch ein einfaches Einstechen des Werkzeugs 30 in die Oberfläche 3 des Werkstücks 1 erlauben.

In Figur 6 ist der Einsatz des in Figur 5 beschriebenen Werkzeugs 30 zur Erzeugung schwalbenschwanzähnlicher Vertiefungen 42, 43 in einer Oberfläche 3 eines Werkstücks 1 gezeigt. Hierbei ist das der Schneidplättchenhalter 30 aus Gründen der Übersichtlichkeit nicht dargestellt, jedoch sind die oberhalb dessen hinausragenden Schneidplättchen 31 und 32 teilweise gezeigt. Da sich die Schneidplättchen 31, 32 gegenüber dem Werkstück 1 mit einer Vorschubbewegung 41 bewegen, die in Figur 6 als nach rechts weisender Pfeil angedeutet ist, ergibt sich aus dieser Orientierung eine vorlaufende Schneide 32 sowie eine nachlaufenden Schneide 31. Die vorlaufende Schneide 32 ist dabei mit ihrer Mittelachse 34 so positioniert, dass diese entgegen der Vorschubrichtung weist und die innere, vorlaufende Schneide 38b ebenfalls so weit geneigt ist, dass diese entgegen der Vorschubrichtung 42 geneigt ist. Befindet sich diese vorlaufende Schneide 32 im Kontakt mit dem Werkstück 1, so erzeugt diese eine Vertiefung 42, die den ersten Teil der späteren Mikrostruktur 9 präsentiert. Aufgrund der beschriebenen Neigung der inneren Schneidekante 38b ergibt sich ein erster Hinterschnitt 42, der linksseitig (also entgegen der Vorschubrichtung) in der Vertiefung hinterschneidet, sich jedoch mit zunehmender Tiefe 10 der Vertiefung verjüngt. Durch die Vorschubgeschwindigkeit 42, die auf die Rotationsgeschwindigkeit des Werkstücks 1 abgestimmt ist, ergibt sich eine spiralförmig umlaufende Teilvertiefung 42. Durch die exakte Abstimmung der Vorschubgeschwindigkeit 41, der Rotationsgeschwindigkeit und der Abstands der beiden Schneidkantenspitzen ist es möglich, dass die nachlaufende Schneide 31 fast genau in der Vertiefung der vorlaufenden Schneide 32b einschneidet, jedoch leicht in Vorschubrichtung verschoben ist, so dass die durch die vorlaufende Schneide 32 erzeugte erste Hälfte 42 der Mikrostruktur 9 durch die nun folgende zweite Hälfte 43 vervollständigt wird. Dabei ist das nachlaufende Schneidplättchen 31 so in entgegengesetzter Richtung zum vorlaufenden Schneidplättchen 32b geneigt, dass die Mittelachse 33 in Längsrichtung des Schneidplättchen 31 in Richtung Vorschubrichtung geneigt ist. Auch hierbei ist es notwendig, dass die Neigung so stark ausgeprägt ist, dass die innere, nachlaufende Schneidkante 37b ebenfalls in Richtung der vorlaufenden Schneide 32b (also in Vorschubrichtung 41) hin geneigt ist. Diese zweite, nachlaufende Schneide 37b erzeugt einen Einschnitt 43, der aufgrund der beschriebenen Neigung des nachlaufenden Schneidplättchens 31 ebenfalls einen Hinterschnitt 43 erzeugt, der zur ersten Vertiefung 42 spiegelsymmetrisch ausgebildet ist. Da beide Vertiefungen 42 und 43 fast aufeinander im Werkstück 1 erzeugt werden und nur leicht horizontal gegeneinander verschoben sind, ergänzen sich beide Hinterschnitte 42 und 43 zu einer schwalbenschwanzähnlichen Mikrostruktur 9, deren Breite mit zunehmender Tiefe 10 zunimmt. Dabei wird die zweite Hälfte 43 der Mikrostruktur 9 zeitgleich mit der ersten Hälfte 42 der Mikrostruktur 42 erzeugt, jedoch aufgrund des Abstands der beiden Schneidkanten, der Rotationsgeschwindigkeit und der ebenfalls hierauf abgestimmten Vorschubgeschwindigkeit wird die zweite Hälfte 43 der Mikrostruktur 9 erst nach einer ganzzahligen Anzahl an Umdrehung des Werkstücks 1 an der gleichen Stelle vervollständigt, an der die vorlaufenden Schneide 32 die erste Hälfte 42 der Mikrostruktur 9 generiert hat. Hieraus ergibt sich eine auf der Oberfläche 3 verlaufende Mikrostruktur 9, die ähnlich einer Tonrille einer Schallplatte spiralförmig verläuft und sich in einem regelmäßigen Abstand 39 aufgrund der Spiralförmigkeit wiederholt. Beide Hinterschnitte 42 und 43 werden damit zeitgleich, aber an unterschiedlichen Positionen erzeugt, so dass die bedien Hinterschnitte 42 und 43 an einer einzigen Position nacheinander erzeugt werden, jedoch aufgrund der spiralförmig umlaufenden Struktur dennoch zeitgleich und parallel in einem einzigen Arbeitsgang erzeugt werden. Die beiden inneren Schneidkanten 37b und 38b erzeugen damit die beiden seitlichen Flanken der Mikrostruktur 9, so dass der Aufweitungswinkel 40 der Mikrostruktur der gleiche Winkel ist, wie der Neigungswinkel der beiden inneren Schneidkanten 37b und 38b zueinander. Die bedien äußeren Schneidkanten 37a und 38a schneiden in der Werkstückoberfläche Flächen aus, die ineinander übergehen und die beiden Hälften 42 und 43 der Mikrostruktur 9 verbinden, wobei der Winkel der beiden äußeren Schneidkanten 37a und 38a zueinander von untergeordneter Bedeutung ist.

## Patentansprüche

1. Bremsscheibe, aufweisend eine Oberflache (3), die zur Erhöhung der Haftfähigkeit einer Beschichtung auf der Oberflache (3) strukturiert ist, wobei die Strukturierung (9a, 9b) der Oberflache (3) mindestens eine Vertiefung (9) aufweist, deren Breite mit zunehmender Tiefe (10) der Vertiefung zunimmt, und die mindestens eine Vertiefung (9) eine spiralförmige Struktur aufweist.

2. Bremsscheibe nach Anspruch 1, **dadurch gekennzeichnet, dass** die mindestens eine Vertiefung (9, 10) ein Querschnittsprofil in Schwalbenschwanzform aufweist.

3. Bremsscheibe nach einem der vorhergehenden Ansprüche, **dadurch gekennzeichnet, dass** die Dicke der Beschichtung größer ist als die Tiefe (10) der mindestens einen Vertiefung (9).

4. Bremsscheibe nach einem der vorhergehenden Ansprüche, **dadurch gekennzeichnet, dass** die Beschichtung aus einem Material mit hoher Abriebfestigkeit besteht.

5. Bremsscheibe nach einem der vorhergehenden Ansprüche, **dadurch gekennzeichnet, dass** die mindestens eine Vertiefung, die eine formschlüssige Verbindung zwischen der Beschichtung und der Bremsscheibe (3) erzeugt, an den Bereichen der Bremsscheibe (3) angebracht ist, an der die beschichtete Bremsscheibe später in Kontakt mit den Bremsbelägen kommt.

6. Verfahren zur Behandlung einer Oberflache einer Bremsscheibe, zur Erhöhung der Haftung einer Beschichtung auf der Oberflache (3), wobei auf der Oberflache (3) mindestens eine Vertiefung (9) eingebracht wird, deren Breite mit zunehmender Tiefe (10) zunimmt, und die mindestens eine Vertiefung (9) eine spiralförmige Struktur aufweist.

7. Verfahren nach Anspruch 6, **dadurch gekennzeichnet, dass** die mindestens eine Vertiefung (9) mittels spanender Materialbearbeitung erzeugt wird.

8. Verfahren nach Anspruch 6 oder 7, **dadurch gekennzeichnet, dass** die mindestens eine Vertiefung (9) in mehreren Schritten erzeugt wird, indem in einem ersteren Schritt (21, 32) eine erste Hinterschneidung (9a, 42) auf der ersten Seitenflanke (9a) der Vertiefung erzeugt wird und in einem zweiteren Schritt (22, 31) ein zweite Hinterscheidung (9b, 43) auf der gegenüberliegenden Seitenflanke (9b) der Vertiefung erzeugt wird.

9. Verfahren nach einem der Anspruche 6 bis 8, **dadurch gekennzeichnet, dass** mehrere Vertiefungen (5, 9) mit einem einzigen Werkzeug (4) zeitgleich erzeugt werden.

10. Verfahren nach einem der Anspruche 6 bis 9, **dadurch gekennzeichnet, dass** sich ein Werkzeug mit mehreren (37a, 37b, 38a, 38b), insbesondere zwei Schneidkanten (37b, 38b), mit einer auf die Rotationsgeschwindigkeit (2) des Werkstucks (1, 3) abgestimmten Vorschubgeschwindigkeit (41) am Werkstuck bewegt, so dass mit einer ersten Schneidkante (6, 38b) des Werkzeugs (4, 30) eine erste Hinterschneidung (9a, 42) auf der ersten Seitenflanke (9a) der Vertiefung (9) erzeugt wird und gleichzeitig mit einer zweiten Schneidkante (7, 37b) des Werkzeugs (4, 30) eine zweite Hinterscheidung (9b, 43) auf der gegenüberliegenden Seitenflanke der Vertiefung (9) erzeugt wird.

## Claims

1. Brake disk, having a surface (3) which is structured in order to increase the adhesive power of a coating on the surface (3), wherein the structuring (9a, 9b) of the surface (3) has at least one depression (9), the width of which increases with increasing depth (10) of the depression, and the at least one depression (9) is in the form of a spiral structure.

2. Brake disk according to Claim 1, **characterized in that** the at least one depression (9, 10) has a cross-sectional profile in a dovetail shape.

3. Brake disk according to either of the preceding claims, **characterized in that** the thickness of the coating is greater than the depth (10) of the at least one depression (9).

4. Brake disk according to one of the preceding claims, **characterized in that** the coating is composed of a material with a high abrasion resistance.

5. Brake disk according to one of the preceding claims, **characterized in that** the at least one depression, which produces a positive connection between the coating and the brake disk (3), is applied to the regions of the brake disk (3) at which the coated brake disk subsequently comes into contact with the brake pads.

6. Method for treating a surface of a brake disk, for increasing the adhesion of a coating on the surface (3), wherein at least one depression (9), the width of which increases with increasing depth (10), is formed on the surface (3), and the at least one depression (9) is in the form of a spiral structure.

7. Method according to Claim 6, **characterized in that** the at least one depression (9) is produced by machining of the material.

8. Method according to Claim 6 or 7, **characterized in that** the at least one depression (9) is produced in a plurality of steps, wherein, in a first step (21, 32) a first undercut (9a, 42) is produced on the first side flank (9a) of the depression and, in a second step (22, 31), a second undercut (9b, 43) is produced on the opposite side flank (9b) of the depression.

9. Method according to one of Claims 6 to 8, **characterized in that** a plurality of depressions (5, 9) is produced simultaneously with a single tool (4).

10. The method according to one of Claims 6 to 9, **characterized in that** a tool having a plurality of cutting edges (37a, 37b, 38a, 38b), in particular two cutting edges (37b, 38b), is moved on the workpiece at a feed rate (41) matched to the speed of rotation (2) of the workpiece (1, 3), with the result that a first undercut (9a, 42) is produced on the first side flank (9a) of the depression (9) with a first cutting edge (6, 38b) of the tool (4, 30) and, at the same time, a second undercut (9b, 43) is produced on the opposite side flank of the depression (9) with a second cutting edge (7, 37b) of the tool (4, 30).

## Revendications

1. Disque de frein, comprenant une surface (3) qui est structurée pour augmenter l'adhérence d'un revêtement de frein sur la surface (3), la structuration (9a, 9b) de la surface (3) possédant au moins une cavité (9) dont la largeur augmente à mesure que la profondeur (10) de la cavité augmente, et l'au moins une cavité (9) présente une structure en forme de spirale.

2. Disque de frein selon la revendication 1, **caractérisé en ce que** l'au moins une cavité (9, 10) présentant un profil de section transversale en forme de queue d'aronde.

3. Disque de frein selon l'une des revendications précédentes, **caractérisé en ce que** l'épaisseur du revêtement est supérieure à l'épaisseur (10) de l'au moins une cavité (9).

4. Disque de frein selon l'une des revendications précédentes, **caractérisé en ce que** le revêtement se compose d'un matériau à haute résistance à l'abrasion.

5. Disque de frein selon l'une des revendications précédentes, **caractérisé en ce que** l'au moins une cavité, laquelle produit une liaison par complémentarité de formes entre le revêtement et le disque de frein (3), est pratiquée au niveau des zones du disque de frein (3) auxquelles le disque de frein revêtu vient plus tard en contact avec les garnitures de frein.

6. Procédé de traitement d'une surface d'un disque de frein en vue d'augmenter l'adhérence d'un revêtement sur la surface (3), au moins une cavité (9) étant incorporée sur la surface (3), dont la largeur augmente à mesure que la profondeur (10) augmente, et l'au moins une cavité (9) présentant une structure en forme de spirale.

7. Procédé selon la revendication 6, **caractérisé en ce que** l'au moins une cavité (9) est produite par usinage de matériau avec enlèvement de copeaux.

8. Procédé selon la revendication 6 ou 7, **caractérisé en ce que** l'au moins une cavité (9) est produite en plusieurs étapes **en ce qu'**une première contre-dépouille (9a, 42) est produite sur le premier flanc latéral (9a) de la cavité dans une première étape (21, 32) et une deuxième contre-dépouille (9b, 43) est produite sur le flanc latéral opposé (9b) de la cavité dans une deuxième étape (22, 33).

9. Procédé selon l'une des revendications 6 à 8, **caractérisé en ce que** plusieurs cavités (5, 9) sont produites simultanément avec un seul outil (4).

10. Procédé selon l'une des revendications 6 à 9, **caractérisé en ce qu'**un outil comportant plusieurs (37a, 37b, 38a, 38b), notamment deux arêtes de coupe (37b, 38b), se déplace sur la pièce avec une vitesse d'avance (41) accordée sur la vitesse de rotation (2) de la pièce (1, 3), de sorte qu'une première contre-dépouille (9a, 42) soit produite sur le premier flanc latéral (9a) de la cavité (9) avec une première arête de coupe (6, 38b) de l'outil (4, 30) et une deuxième contre-dépouille (9b, 43) soit produite simultanément sur le flanc latéral opposé (9b) de la cavité (9) avec une deuxième arête de coupe (7, 37b) de l'outil (4, 30).
